# EUROPEAN PATENT SPECIFICATION

(11) **EP 3 570 393 B1**
(45) Date of publication and mention of the grant of the patent: **19.01.2022**
(21) Application number: 17891793.6
(22) Date of filing: 11.04.2017
(51) Int. Cl.: H02B 13/025, H02B 1/28, H02B 1/56

(54) **SWITCHGEAR**
SCHALTANLAGE
APPAREILLAGE DE COMMUTATION

(30) Priority: 12.01.2017 JP 2017003326
(43) Date of publication of application: 20.11.2019
(73) Proprietor: Hitachi Industrial Equipment Systems Co., Ltd., Chiyoda-ku Tokyo 101-0022 (JP)
(72) Inventor: WATANABE, Naoya, Tokyo 101-0022 (JP); MAKIYAMA, Fumio, Tokyo 101-0022 (JP); HONMA, Masahiro, Tokyo 101-0022 (JP); HORII, Chihiro, Tokyo 101-0022 (JP); SAWADA, Masashi, Tokyo 101-0022 (JP); KATOU, Takashi, Tokyo 101-0022 (JP)
(74) Representative: MERH-IP Matias Erny Reichl Hoffmann Patentanwälte PartG mbB
(86) International application number: PCT/JP2017/014830
(87) International publication number: WO 2018/131179

(56) References cited:
- EP-A1- 1 450 458
- DE-A1- 19 646 547
- FR-A- 1 143 282
- JP-A- 2009 171 833
- JP-A- 2009 171 833
- JP-A- 2011 223 721
- JP-A- 2013 011 744
- JP-U- S5 452 653
- US-A1- 2013 206 759
- US-A1- 2015 060 445

## Description

### Technical Field

The present invention relates to a structure of switchgear and more particularly to a technique effectively applied to a metal closed switchgear, an interior space of which is divided into plural compartments by partition plates.

### Background Art

Metal closed switchgears accommodating high-voltage equipment such as switching devices in metal closure boxes are widespread in facilities of large electric equipment capacities such as power plants, electric power substations, ironworks, and petrochemical plants.

The metal closed switchgears are classified roughly into three types: a metal-clad type where an internal space is divided into plural compartments (storage spaces) by metal partition plates; a compartment type where the internal space is divided into the plural compartments by non-metal (insulative) partition plates; and a cubicle type representing other than the above.

These metal closed switchgears have the following problem. In the event of a short circuit accident (arc accident) or the like at an internal high-voltage equipment, an explosive production of high-temperature high-pressure gas (hot gas) may be induced to cause damage to the housing or partition plates of the switchgear or to cause failure of other devices accommodated therein. For this reason, a variety of safety measures for reducing the impact of high-temperature high-pressure gas (hot gas) have been investigated.

A technique set forth in Patent Literature 1, for example, is known as a background art related to the technical field of the invention. Patent Literature 1 discloses a switchgear including a housing equipped with an air intake part for introducing an external air into the internal space for electric equipment. The switchgear employs, as the air intake part, a plate body formed with through-holes having such a profile coefficient as to provide a larger fluid energy loss in an air exhaust direction than in an air intake direction.
Patent Literature 2 shows a medium voltage switchgear with function compartments. The medium voltage switchgear is equipped with at least one absorber device for accidental arcs, allocated in each case to one function compartment. An absorber device allocated to the function compartment is led through the rear and/or lateral region of the medium voltage switchgear.
Patent Literature 3 shows a pressure release device for a protective housing for flameproof enclosure of electrical operating means.
Patent Literature 4 shows a protective housing designed as a pressure proof capsule which has a pressure relief valve which comprises a porous body and a pore closure about its perimeter for preventing the transition of a flame about an edge of the porous body.
Patent Literature 5 shows a woven elastic metal gasket being arranged around the edge of the opening between a filter plate and the surface of a switchgear cabinet to ensure a seal that is not gas-tight, but stops the flame due to the numerous interstices passing through the compressed gasket.
Patent Literature 6 shows a structural unit for receiving an element for the absorption of escaping hot gases caused by an arc in electrical functional units of high and medium voltage, in particular in switchgear of high or medium voltage.
Patent Literature 7 shows a switchgear, in which the case is constituted of a rear wall, a front wall opposing to the rear wall, a bottom wall, a ceiling wall opposing to the bottom wall, and a sidewall, the rear wall has a suction opening at the downside, the high voltage bus-bar chamber, the high voltage apparatus chamber and the low voltage control chamber are communicated, air passing through the three chambers is exhausted from a first exhaust opening of the case, and the bus bar to connect at least a high voltage apparatus in the high voltage apparatus chamber and a connection bus-bar to connect the adjoining bus bar and cable head are covered by a solid insulator.

### Citation List

### Patent Literature

PTL 1: Japanese Patent Application Laid-Open No. 2011-259600
PTL 2: DE 196 46 547 A1
PTL 3: US 2015/060445 A1
PTL 4: US 2013/206759 A1
PTL 5: FR 1 143 282 A
PTL 6: EP 1 450 458 A1
PTL 7: JP 2009 171833 A

### Summary of Invention

### Technical Problem

In the metal closed switchgear, as described above, a device configuration for minimizing the impact of the high-temperature high-pressure gas (hot gas) in conjunction with the occurrence of short circuit accident (arc accident) has been investigated. Particularly, the device configuration is required to prevent other adjoining compartments from being impacted if the switchgear fails to release all the produced hot gas from some compartment to the outside.

That is, a precondition for arc resistance is to prevent internal arc from impacting other compartments while preventing the internal arc from impacting the outside of the switchgear (outside of the board).

In the event of an arc accident in a compartment, for example, the high-temperature high-pressure gas is produced, leading to explosive pressure rise in the compartment concerned. In this case, the compartment is required of a considerable degree of strength to withstand the pressure by way of its cubic capacity alone. Therefore, the compartment is normally provided with a pressure release duct.

In a case where the compartment is short of strength even with the addition of the cubic capacity of pressure release duct or where a switchgear without a pressure release structure is remodeled, a structure which is adapted to absorb the high-temperature high-pressure gas (hot gas) for reducing the impact to other compartments as well as to achieve an increased cubic capacity to release the pressure can be constructed by applying an explosion proof structure to a partition wall (called barrier) between the compartments. This provides an easy recovery of the switchgear after the short circuit accident (arc accident) and the like, constituting a central issue in the enhancement of safety and reliability of the switchgear.

The structure disclosed in the above-described Patent Literature 1 is adapted to reduce the impact of the hot gas to the outside of the switchgear by employing the plate body as the air intake part disposed at a boundary between the inside and the outside of the switchgear. However, this structure may turn out to be a measure effective only for the air intake part depending upon the magnitude of the short circuit accident. The structure does not give consideration to the impact on the adjoining compartment. Furthermore, the structure is not easy to apply to the existing switchgear, either.

In the metal closed switchgear containing a plurality of compartments therein, as just described, there exists a demand for highly reliable switchgear which is capable of reducing the impact of thermally expanded high-temperature high-pressure gas (hot gas) on other compartments even when the high-temperature high-pressure gas (hot gas) is produced in some compartments due to the arc accident or the like.

### Solution to Problem

The above problem is solved by the subject matter of the appended claims.

### Advantageous Effects of Invention

In the metal closed switchgear containing therein the plural compartments according to the invention, the sintered metal filters are applied to the partition walls (barriers) between the compartments so that the switchgear is adapted to reduce the impact of the high-temperature high-pressure gas (hot gas) on other compartments by achieving an increased cubic capacity for pressure release and absorbing the high-temperature high-pressure gas (hot gas) by means of the filters.

As just described, the compartment with the internal arc occurrence is adapted to discharge the high-temperature high-pressure gas (hot gas) reduced in the impact to other compartments or to discharge the hot gas to the outside of the switchgear (outside of the board). Thus, the highly reliable switchgear can be brought into reality.

These and other objects than the above, the configurations and the effects of the invention will be apparent from the following description of the embodiments and examples useful for understanding the invention hereof.

### Brief Description of Drawings

Figure 1 is a general schematic diagram showing a switchgear according to a first example useful for understanding(not part of the invention)
Figure 2 is a diagram showing an explosion proof filter of the switchgear according to the first example useful for understanding (not part of the invention).
Figure 3 is a sectional view taken on the line A-A' in Figure 2.
Figure 4 is a view as viewed along the arrowed the lines B-B' in Figure 2.
Figure 5 is a diagram showing an explosion proof filter of a switchgear according to a second example useful for understanding (not part of the invention).
Figure 6 is a sectional view taken on the line C-C' in Figure 5.
Figure 7 is a view as viewed along the arrowed lines D-D' in Figure 5.
Figure 8 is a diagram showing an explosion proof filter of a switchgear according to a first embodiment of the invention.
Figure 9 is a sectional view taken on the line E-E' in Figure 8.
Figure 10 is a view as viewed along the arrowed lines F-F' in Figure 8.
Figure 11 is a diagram showing an explosion proof filter of a switchgear according to a third example useful for understanding (not part of the invention)
Figure 12 is a sectional view taken on the line G-G' in Figure 11.
Figure 13 is a view as viewed along the arrowed lines H-H' in Figure 11.
Figure 14 is a diagram showing an explosion proof filter of a switchgear according to a fourth example useful for understanding (not part of the invention).
Figure 15 is a sectional view taken on the line I-I' in Figure 14.
Figure 16 is a view as viewed along the arrowed lines J-J' in Figure 14.
Figure 17 is a diagram showing a ventilator of a switchgear according to a fifth example useful for understanding (not part of the invention).
Figure 18 is a sectional view taken on the line K-K' in Figure 17.
Figure 19 is a diagram showing a state where a flapper of the ventilator of Figure 17 is open. Description of Embodiments and examples useful for understanding the invention

The examples useful for understanding and the embodiment of the invention will hereinbelow be described with reference to the accompanying drawings. In the following figures, equal or similar reference numerals are assigned to equal or similar components, which are explained only once in some cases to avoid repetition. First example useful for understanding (not part of the invention)

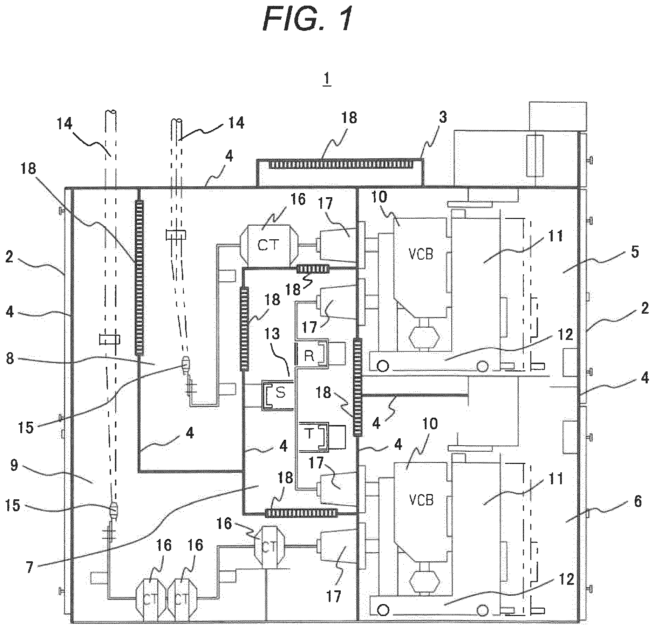

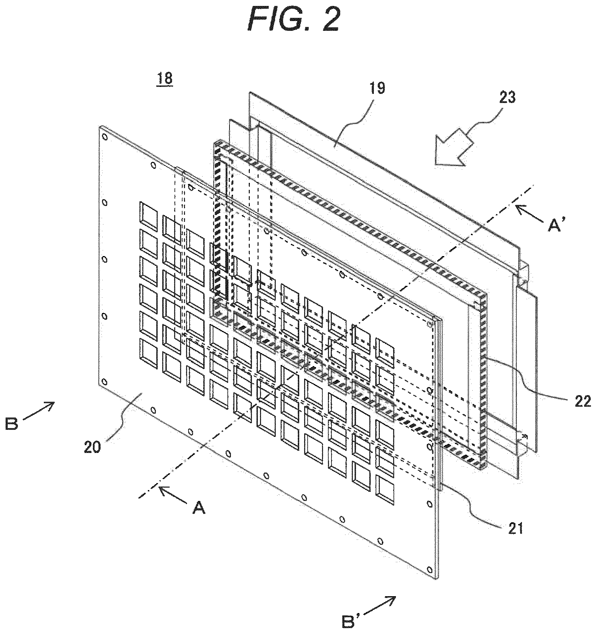

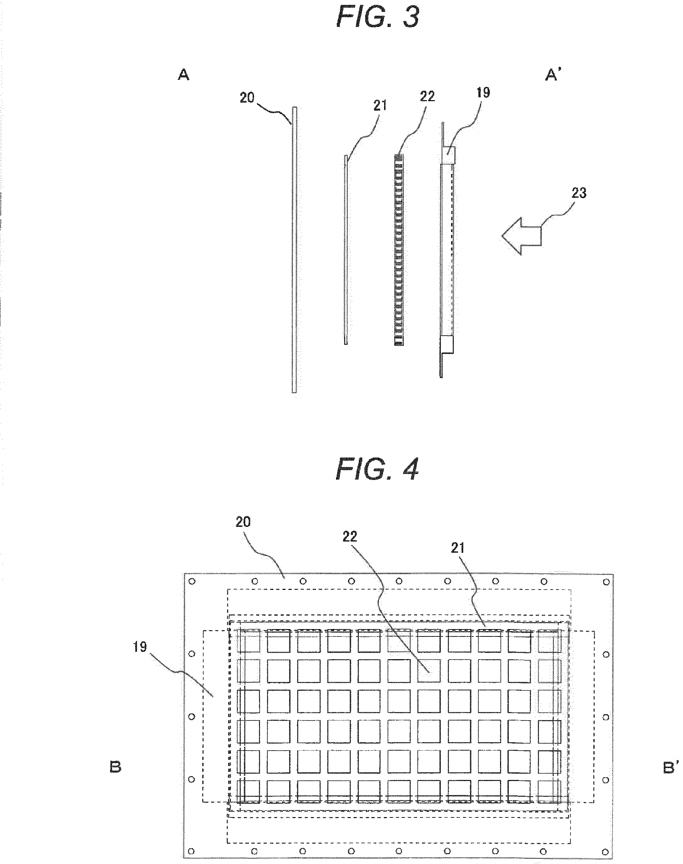

A switchgear according to a first example useful for understanding (not part of the invention) is described with reference to Figure 1 to Figure 4. Figure 1 is a sectional view showing a general structure of a switchgear according to the first example useful for understanding (not part of the invention). Figure 2 is a perspective view showing a schematic configuration of an explosion proof filter disposed in the switchgear of Figure 1. Figure 3 is a sectional view taken on the line A-A' in Figure 2. Figure 4 is a view as viewed along the lines B-B' in Figure 2.

The term "explosion proof filter" as used herein is defined to mean a filter which prevents or reduces the impact of the heat (temperature) or pressure of the high-temperature high-pressure gas (hot gas) on the other compartments in a case where the thermally expanded high-temperature high-pressure gas (hot gas) is produced in some compartments due to the arc accident or the like.

As shown in Figure 1, a switchgear 1 of the first example useful for understanding (not part of the invention) is a so-called metal closed switchgear where an internal space of a housing 2 thereof is divided into a plurality of compartments (storage spaces) by barriers (partition plates) 4. The housing 2 and the barriers (partition plates) 4 are composed mainly of a steel material such as iron or stainless steel (SUS steel) to secure strength. Since a current on the order of 2000A normally flows through the individual devices in the switchgear 1, a part involving a potential fear of the influence of eddy current may desirably employ the stainless steel (SUS steel).

A ventilator (air vent) 3 for discharging the heat and pressure produced in the housing 2 to the outside is disposed on a top portion of the housing 2.

The internal space of the housing 2 is divided into five compartments (storage spaces) which include: an upper breaker compartment 5 and a lower breaker compartment 6 vertically stacked on top of each other; an upper cable compartment 8 and a lower cable compartment 9 disposed on a far side of the breaker compartments; and a bus-bar compartment 7 interposed between the breaker compartments and the cable compartments or namely, disposed on the far side of the breaker compartments and in adjoining relation with the cable compartments, as arranged in this order from the front side (the right-hand side as seen in Figure 1) of the switchgear 1 toward the back side thereof (the left-hand side as seen in Figure 1).

A vacuum circuit breaker (VCB) 10 is accommodated in each of the upper breaker compartment 5 and the lower breaker compartment 6. Each of the vacuum circuit breakers (VCB) 10 is provided with a solenoid operation device 11. The vacuum circuit breaker (VCB) 10 and the solenoid operation device 11 are carried on a carriage 12, which is drawn out to the front side of the switchgear 1 (the right-hand side as seen Figure 1), thus permitting the replacement or maintenance of the vacuum circuit breaker (VCB) 10 or the solenoid operation device 11.

The number and location of the above-described compartments (storage spaces) are literally cited merely as examples, and are not necessarily limited to five. While the vacuum circuit breakers (VCB) are cited as examples of devices accommodated in the upper and lower compartments, the devices may also be switches such as air blast breakers or gas circuit breakers.

The upper cable compartment 8 and the lower cable compartment 9 are respectively connected with a cable 14 for external communications, each of which is electrically connected to a current transformer (CT) 16 via a cable terminal 15. It is noted that the number and location of the current transformers (CT) 16 disposed in the upper cable compartment 8 and the lower cable compartment 9 are cited only for illustrative purpose, and are not limited to these.

The current transformers (CT) 16 of the upper cable compartment 8 and the lower cable compartment 9 are each electrically connected to each of the vacuum circuit breakers (VCB) 10 of the upper breaker compartment 5 and the lower breaker compartment 6 via a bushing 17.

Bus bars (R, S, T) 13 are disposed in the bus-bar compartment 7 and are electrically connected to the vacuum circuit breakers (VCB) 10 of the upper breaker compartment 5 and the lower breaker compartment 6 via the bushings 17.

It is noted here that the switchgear 1 of the first example useful for understanding (not part of the invention) has a configuration where some of the barriers (partition plates) 4 defining the compartment (storage space) are provided with an explosion proof filter 18, as shown in Figure 1. Figure 1 shows the first example useful for understanding (not part of the invention) where the explosion proof filters 18 are provided at the barrier 4 between the upper breaker compartment 5, the bus-bar compartment 7 and the lower breaker compartment 6; at the barrier 4 between the bus-bar compartment 7 and the upper cable compartment 8; at the barrier 4 between the bus-bar compartment 7 and the lower cable compartment 9; at the barrier 4 between the upper cable compartment 8 and the lower cable compartment 9; and in the ventilator 3.

In a case where an internal arc accident (internal short circuit accident) occurs in the upper breaker compartment 5, for example, the high-temperature high-pressure gas (hot gas) is produced in the upper breaker compartment 5. The partition walls forming the upper breaker compartment 5, namely, the barrier 4 between the upper breaker compartment 5 and the lower breaker compartment 6, the barrier 4 between the upper breaker compartment 5 and the upper cable compartment 8, the barrier 4 between the upper breaker compartment 5 and the bus-bar compartment 7, the barrier 4 between the upper breaker compartment 5 and the housing 2, etc. involve possibility of deformation or rupture due to the impact of the temperature and pressure of the hot gas.

When any of the partition walls forming the upper breaker compartment 5 is deformed or ruptured, the heat and pressure are applied to devices accommodated in other compartments, particularly to devices accommodated in the compartments adjoining the upper breaker compartment 5 so that a malfunction or breakdown may result.

According to the switchgear of the first example useful for understanding (not part of the invention), therefore, some of the barriers (partition plates) 4 constituting each compartment are provided with the explosion proof filter 18 such that the explosion proof filter 18 can reduce the impact of the hot gas to other compartments by absorbing the heat (temperature) and pressure of the high-temperature, high-pressure gas (hot gas) that is moving into the other compartments. In contrast to the configuration where the compartments are blocked off from each other by the barriers, this configuration permits the other compartment to serve as a substitute for a pressure release compartment. This ensures that even a switchgear with a limited cubic capacity is capable of reducing the impact of the hot gas to the outside.

A configuration of the explosion proof filter 18 is described with reference to Figure 2 to Figure 4. As shown in Figure 2 and Figure 3, the explosion proof filter 18 of the first example useful for understanding (not part of the invention) has a frame-shaped structure where a sintered metal material 22 is fitted in a recess of the metal holder 19 and is supportively fixed in position by an outside frame 20 as a support member for the sintered metal material 22. A packing 21 as a sealing material is interposed between the outside frame 20 and the sintered metal material 22 to prevent the leakage of the hot gas from an outer periphery of the sintered metal material 22. The metal holder 19 and the outside frame 20 are joined together by welding.

A material ensuring good sealing performance and adherence such as neoprene rubber or O-ring is selected for the packing 21. The metal holder 19 and the outside frame 20 may employ a steel material that can support use in combination such as iron and stainless steel (SUS steel). Incidentally, the packing 21 may be interposed between the metal holder 19 and the sintered metal material 22 or otherwise disposed on the opposite sides of the sintered metal material 22. The metal holder 19 and the outside frame 20 can be joined together by way of bolt fixation using bolt and nut.

The outside frame 20 is formed with a plurality of openings arranged in a lattice form. As viewed in directions B-B' in Figure 2, the sintered metal material 22 is exposed through these openings as shown in Figure 4.

The explosion proof filter 18 having the configuration shown in Figure 2 to Figure 4 is aligned with an opening (not shown) formed in the barrier 4 in the switchgear 1 and installed therein by fixing the outside frame 20 to the barrier 4 by welding or bolt fixation.

A hot gas 23 resultant from the internal arc accident (internal short circuit accident) flows from the metal holder 19 side toward the outside frame 20 side, as shown in Figure 2 and Figure 3, and is discharged into the adjoining compartment through the plural openings arranged in the lattice form of the outside frame 20.

The sintered metal material 22 is formed by compacting and fusing metal powder into shape at around a melting point of the metal powder and is a porous solid with large interparticle gaps (voids). This structural feature provides buffering effects such as explosion protection, ignition prevention, and reduction of temperature change and pressure change.

As suggested by the switchgear of the first example useful for understanding (not part of the invention), the following advantage can be obtained by mounting the explosion proof filter employing the sintered metal material to some of the partition walls (barrier) dividing the internal space. Even when the thermally expanded high-temperature, high-pressure gas (hot gas) is produced in some of the compartments due to the arc accident or the like, the hot gas is cooled and reduced in pressure by the sintered metal material while flowing into the other compartments so that the impact on the devices in the other compartments can be reduced.

Since the hot gas can be discharged to the other compartments through the sintered metal material, it is unnecessary for each compartment to be provided with a pressure release chamber or duct. Hence, the switchgear can be constructed in a compact structure.

As suggested by the first example useful for understanding (not part of the invention), the explosion proof filter has the configuration where the sintered metal material is provided with the outside frame. This permits the filter to be easily mounted to place where the filter is needed. When the existing switchgear is retrofitted for the purpose of enhancing the explosion proof performance, the retrofitting work can be easily accomplished simply by removing the existing metal plates such as the barriers and replacing the metal plates with the explosion proof filters.

The outside frame 20 is formed with the plural openings arranged in the lattice form to achieve a sufficient strength for itself and a sufficient strength for supporting the sintered metal material 22. Alternatively, the outside frame 20 may be centrally formed with a large opening such that the sintered metal material 22 is supportively fixed in position by a peripheral part of the outside frame 20 as suggested by the second example useful for understanding to be described below. Second example useful for understanding (not part of the invention)

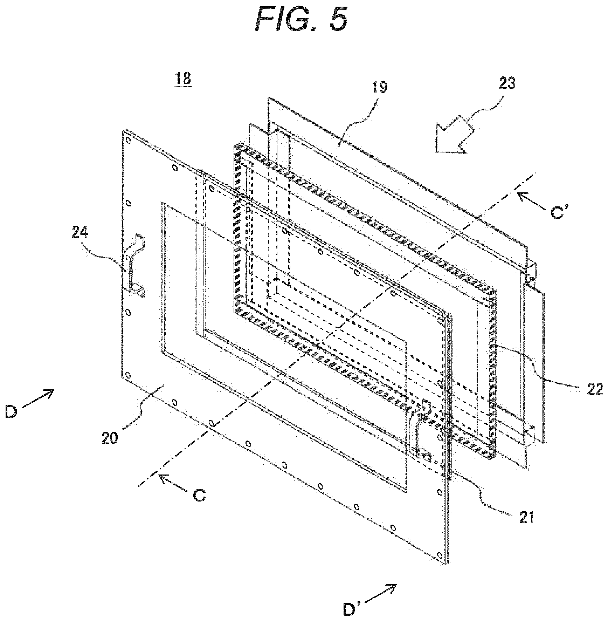

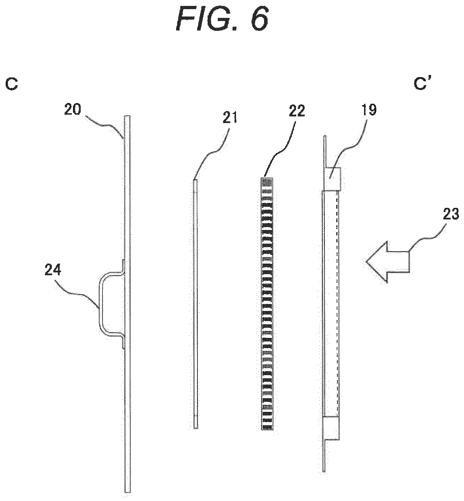

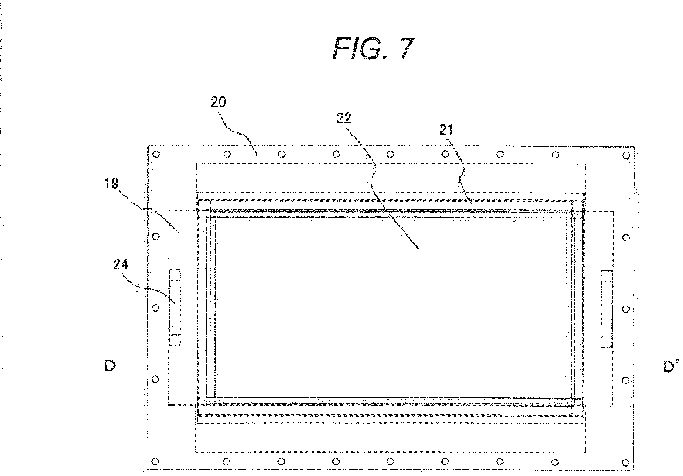

A switchgear according to a second example useful for understanding (not part of the invention) is described with reference to Figure 5 to Figure 7. Figure 5 is a perspective view schematically showing a configuration of an explosion proof filter of the second example useful for understanding the invention. Figure 6 is a sectional view taken on the line C-C' in Figure 5. Figure 7 is a view as

The explosion proof filter 18 of this second example useful for understanding (not part of the invention) is a modification of the explosion proof filter of the first useful for understanding (not part of the invention), having the frame-shaped structure similarly to that of the first example useful for understanding (not part of the invention)

The explosion proof filter of this second example useful for understanding differs from the filter of the first example useful for understanding in that the outside frame 20 is provided with handles 24 on the peripheral part thereof and is centrally formed with a large opening. The other components are the same as those of the first example useful for understanding .

The handles 24 attached to the outside frame 20 facilitate the handling of the explosion proof filter 18 when mounting or dismounting the filter. The passage area of the hot gas can be increased by forming the large opening at the center of the outside frame 20. This is effective in more quickly lowering the pressure and temperature in the compartment encountering the hot gas production.

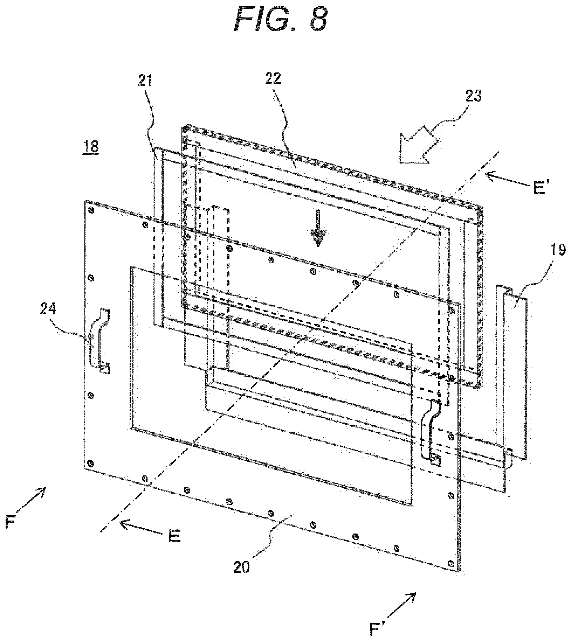

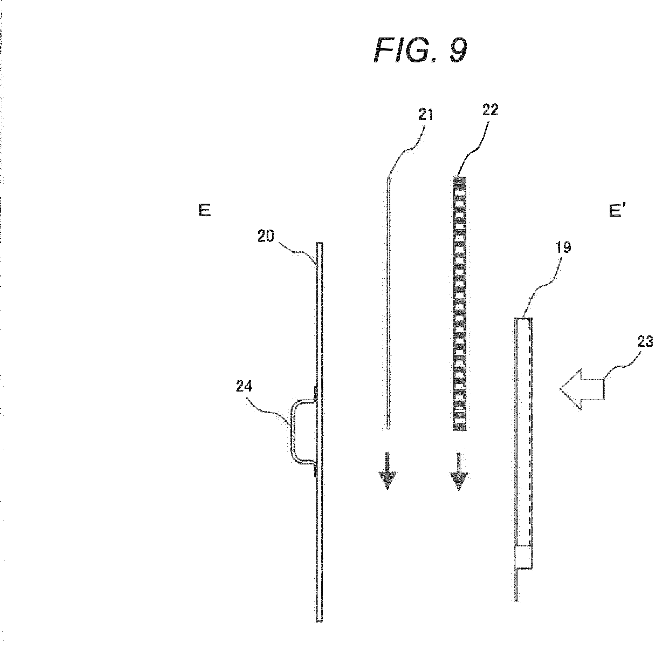

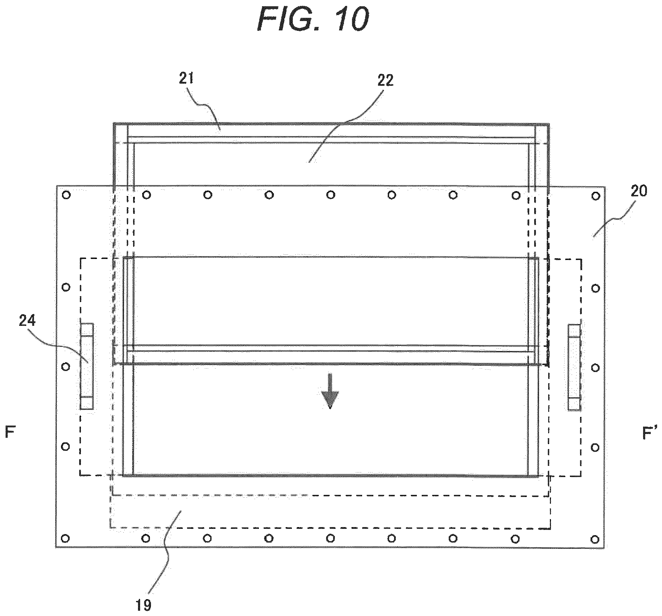

A switchgear according to the first embodiment of the invention is described with reference to Figure 8 to Figure 10. Figure 8 is a perspective view schematically showing a configuration of an explosion proof filter of this embodiment. Figure 9 is a sectional view taken on the line E-E' in Figure 8. Figure 10 is a view as viewed along the arrowed lines F-F' in Figure 8.

As shown in Figure 8 to Figure 10, the explosion proof filter 18 of this embodiment is formed in a sliding structure where the sintered metal material 22 is inserted into the recess of the metal holder 19 from above and is supportively fixed in position by the outside frame 20 as a supporting member of the sintered metal material 22. The other components are the same as those of the second example useful for understanding (not part of the invention).

The explosion proof filter is improved in exchangeability (workability) in the replacement of the sintered metal material 22 by adopting the structure, as exemplified by the explosion proof filter 18 of this embodiment, where the sintered metal material 22 is mounted in the recess of the metal holder 19 by slidably moving the sintered metal material 22 from above in the direction of the arrow (downward). This is an effective structure when the replacement of the sintered metal material is required due to aging degradation or the like.

While Figure 8 to Figure 10 show the structure where the sintered metal material 22 is slidably moved from above the metal holder 19 in the direction of the arrow (downward), the sintered metal material may also be transversely inserted or inserted from below. Further, the outside frame 20 may also be formed with the plural openings arranged in the lattice form just as in the first example useful for understanding (not part of the invention). Third example useful for understanding (not part of the invention)

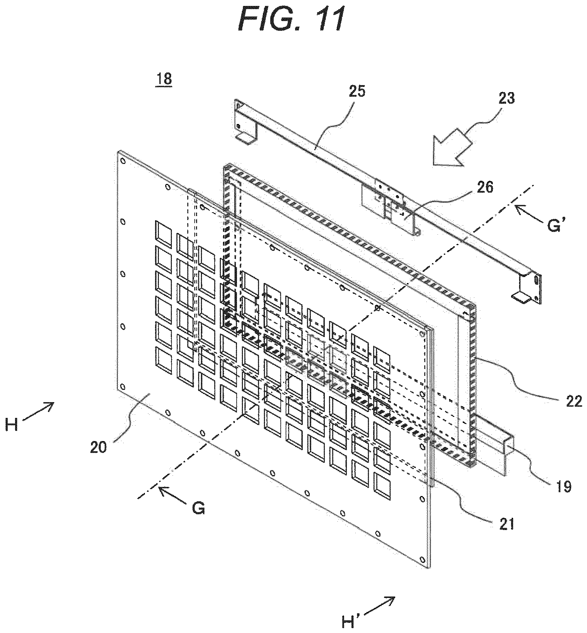

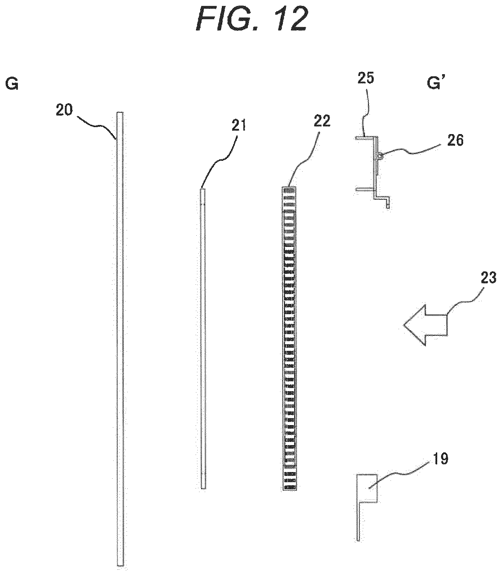

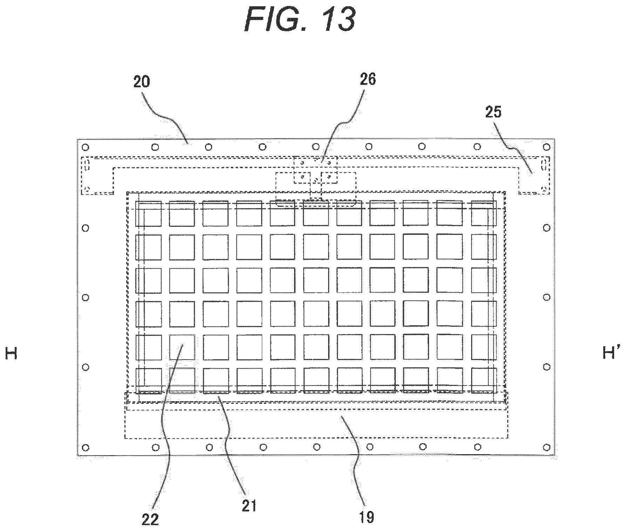

A switchgear according to a third example useful for understanding (not part of the invention) is described with reference to Figure 11 to Figure 13. Figure 11 is a perspective view schematically showing a configuration of an explosion proof filter. Figure 12 is a sectional view taken on the line G-G' in Figure 11. Figure 13 is a view as viewed along the arrowed lines H-H' in Figure 11.

As shown in Figure 11 to Figure 13, the explosion proof filter 18 of this third example useful for understanding (not part of the invention) has a hinge structure where the sintered metal material 22 is supportively fixed in position by the metal holder 19, a hinge fitting 25 and the outside frame 20 and is pivotally mounted to the barrier 4 of the switchgear 1 by means of a hinge 26 fixed to the hinge fitting 25. The other components are the same as those of the first example useful for understanding (not part of the invention) . Incidentally, a metal holder-19 side of the outside frame 20 is fixed to the barrier 4 by means of bolt fixation or the like.

The explosion proof filter is improved in exchangeability (workability) in the replacement of the sintered metal material 22 by adopting the structure, as exemplified by the explosion proof filter 18 of the embodiment, where the explosion proof filter 18 (the sintered metal material 22) is mounted to the barrier 4 by means of the hinge 26. Just as that of the first embodiment, this is an effective structure when the replacement of the sintered metal material is required due to aging degradation or the like. Fourth example useful for understanding (not part of the invention)

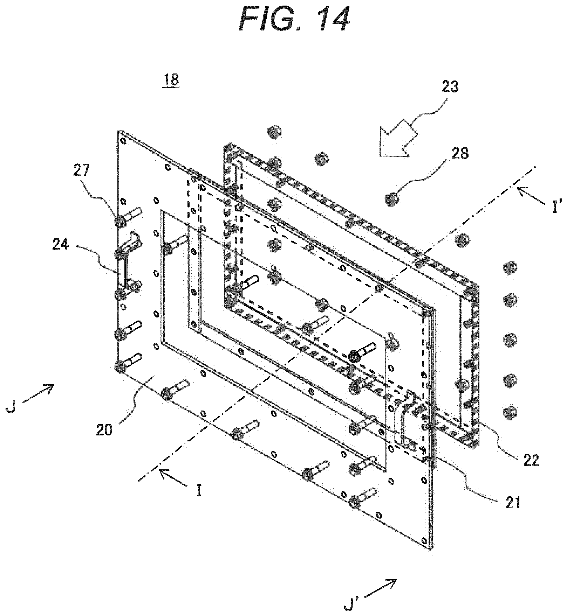

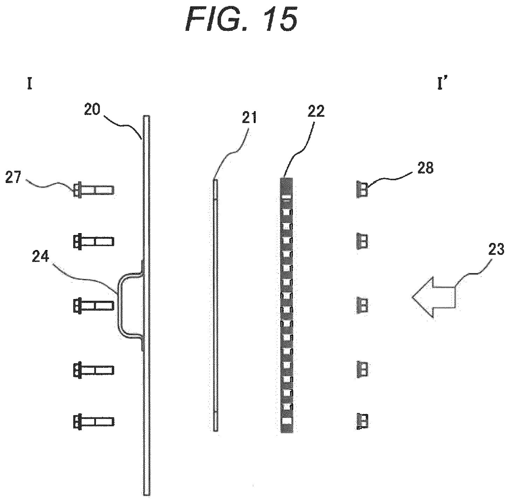

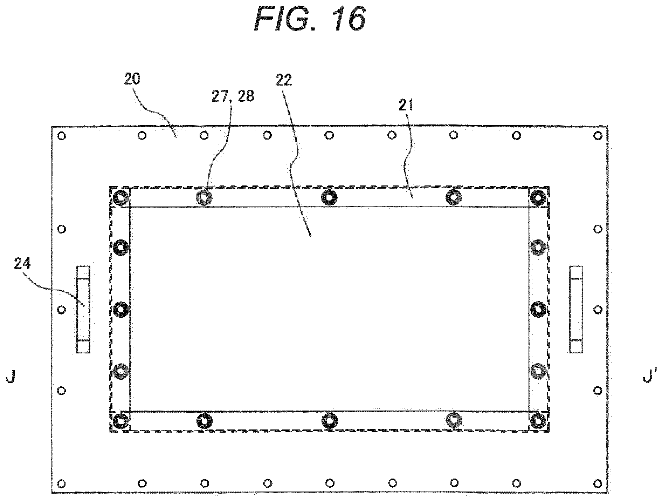

A switchgear according to a fourth example useful for understanding (not part of the invention) is described with reference to Figure 14 to Figure 16. Figure 14 is a perspective view schematically showing a configuration of an explosion proof filter . Figure 15 is a sectional view taken on the line I-I' in Figure 14. Figure 16 is a view as viewed along the arrowed lines J-J' in Figure 14.

As shown in Figure 14 to Figure 16, the explosion proof filter 18 of the fourth example useful for understanding (not part of the invention) has a bolt fixation structure where the sintered metal material 22 is supportively fixed in position by fixing the peripheral part of the outside frame 20 to the barrier 4 of the switchgear 1 by means of bolts 27 and nuts 28.

As suggested by the explosion proof filter 18 , the parts count can be reduced by fixing the sintered metal material 22 to the barrier 4 by means of the outside frame 20, the bolts 27 and the nuts 28 but not by using the metal holder 19. Since the bolt 27 and the nut 28 provide quick release, this filter is suited for use at place where the filter is relatively frequently removed. Fifth example useful for understanding (not part of the invention)

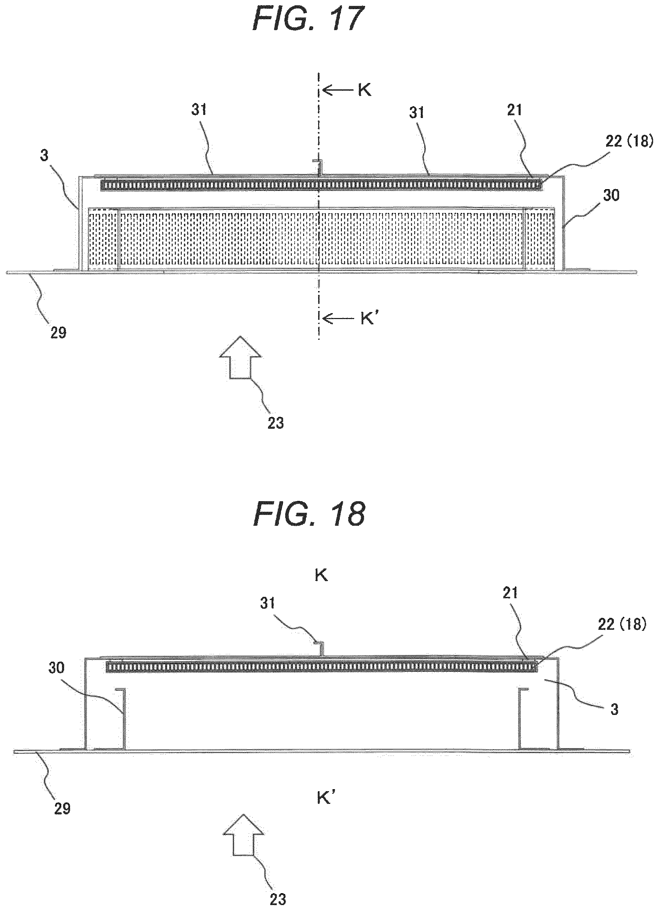

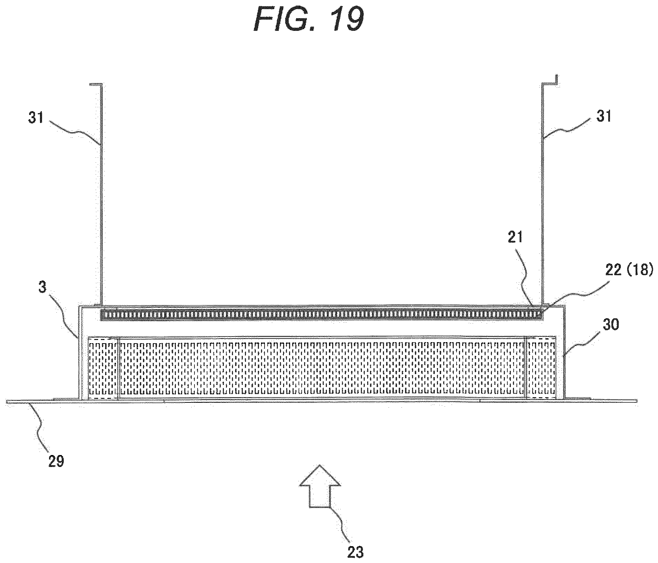

A switchgear according to a fifth example useful for understanding (not part of the invention) is described with reference to Figure 17 to Figure 19. Figure 17 is sectional view schematically showing a configuration of a ventilator (air vent). Figure 18 is a sectional view taken on the line K-K' in Figure 17. Figure 19 shows a state where a flapper 31 of the ventilator is open.

As described with reference to Figure 1 illustrating the first example useful for understanding (not part of the invention), the ventilator (air vent) 3 for discharging the heat and pressure produced in the housing 2 is disposed on the top portion of the housing 2.

The ventilator (air vent) 3 is fixed to a frame 29 (the housing 2 of the switchgear) and contains a flange 30 therein. A flapper 31 adapted to open in conjunction with the pressurization of the inside of the ventilator (air vent) 3 for releasing the internal gas to the outside (upside) is disposed at an upper side of the ventilator.

The switchgear of this fifth example useful for understanding (not part of the invention) is provided with the explosion proof filter 18 (sintered metal material 22) at place inside the ventilator 3 and under the flapper 31 such that the hot gas produced in the switchgear can be cooled and depressurized by the filter when the flapper 3 is opened to release the hot gas to the outside (upside). This is effective to reduce the impact of the hot gas to wirings and ducts disposed in an upper part of the switchgear when the hot gas produced in the switchgear is released from the ventilator to the outside (upside).

Any one of the measures of the first, second and fourth examples useful for understanding (not part of the invention) may be used for mounting the explosion proof filter 18 (sintered metal material 22) in the ventilator 3. Further, the sintered metal material may be attached to the ventilator disposed at the switchgear. Alternatively, the existing ventilator may be removed to be replaced with another ventilator containing the sintered metal material therein.

According to the examples useful for understanding (not part of the invention) as described above, even when the thermally expanded high-temperature high-pressure gas (hot gas) is produced in some of the compartments due to the arc accident or the like, the impact of the hot gas to the other compartments or the impact of the gas released from the ventilator can be reduced. Thus, the switchgear achieves enhanced reliability.

It is noted that the explosion proof filter illustrated in each of the foregoing examples useful for understanding (not part of the invention) may be disposed in a newly manufactured switchgear or otherwise, may be newly installed at some of the partition walls (barriers) of the existing switchgear. The explosion proof filter is configured as a unit including the sintered metal material as exemplified by those of first, second and fourth examples useful for understanding (not part of the invention) so that the explosion proof filter can also be installed in the existing switchgear by simple remodeling.

The foregoing embodiment and examples useful for understanding (not part of the invention), for example, are the detailed illustrations to clarify the invention. The invention is not necessarily limited to those including all the components described above. Addition, omission and replacement of components between the embodiment and the examples useful for understanding can occur as long as they are included within the scope of the claims.

### Reference Signs List

1: switchgear, 2: housing, 3: ventilator (air vent), 4: barrier (partition plate), 5: upper breaker compartment, 6: lower breaker compartment, 7: bus-bar compartment, 8: upper cable compartment, 9: lower cable compartment, 10: vacuum circuit breaker (VCB), 11: solenoid operation device, 12: carriage, 13: bus bar (R, S, T), 14: cable, 15: cable terminal, 16: current transformer (CT), 17: bushing, 18: explosion proof filter, 19: metal holder, 20: outside frame, 21: packing, 22: sintered metal material, 23: hot gas, 24: handle, 25: hinge fitting, 26: hinge, 27: bolt, 28: nut, 29: frame, 30: flange, 31: flapper

## Claims

1. A metal closed switchgear (1), an internal space of which is divided into a plurality of compartments (5, 6, 7, 8, 9) by partition walls (4),
wherein some of the partition walls (4) are provided with an explosion proof filter (18),
**characterized in that** the explosion proof filter (18) employs a sintered metal material (22) and includes a metal holder (19) mounted to the partition wall (4) and supportively fixing the sintered metal material (22) in position, wherein the explosion proof filter (18) includes an elastic body disposed between the sintered metal material (22) and a support member (20) for supportively fixing the sintered metal material (22) in position and wherein
the sintered metal material (22) is slidably inserted in a recess of the metal holder (19) and supportively fixed between the support member (20) and the metal holder (19).

2. The switchgear (1) according to Claim 1,
wherein the explosion proof filter (18) includes a metal holder (19) pivotally mounted to the partition wall (4) by means of a hinge (26) and supportively fixing the sintered metal material (22) in position, and
the sintered metal material (22) is supportively fixed between the support member (20) and the metal holder (19) .

3. The switchgear (1) according to Claim 1,
wherein the explosion proof filter (18) is a bolt fixation type explosion proof filter where the sintered metal material (22) is supportively fixed in position by mounting the support member (20) to the partition wall (4) by means of a plurality of bolts and nuts.

4. The switchgear (1) according to claim 2,
wherein the metal holder (19) is mounted to the partition wall (4) by welding or using a plurality of bolts and nuts.

5. The switchgear (1) according to any one of Claims 2 to 4,
wherein the support member (20) includes a plurality of openings arranged in a lattice form.

6. The switchgear (1) according to any one of Claims 2 to 4,
wherein the support member (20) includes an opening at the center thereof and supportively fixes the sintered metal material (22) by means of a peripheral part of the opening.

7. The switchgear (1) according to any one of Claims 2 to 6,
wherein the support member (20) includes at least one handle (24).

8. The switchgear (1) according to any one of Claims 1 to 7, further comprising:
a plurality of breaker compartments (5, 6) vertically stacked on top of each other in a housing (2) and each accommodating a breaker (10) therein;
a cable compartment (8, 9) disposed on a far side of the plural breaker compartments (5, 6) and accommodating cables (14) electrically connected to the breakers (10); and
a bus-bar compartment (7) disposed on the far side of the plural breaker compartments (5, 6) and in adjoining relation with the cable compartment (8, 9), and accommodating therein bus bars (13) electrically connected to the breakers (10),
wherein the explosion proof filter (18) is disposed at least in one of the places between respective pairs of the plural breaker compartments (5, 6); between the plural breaker compartments (5, 6) and the cable compartment (8, 9); between the plural breaker compartments (5, 6) and the bus-bar compartment (7); and between the cable compartment (8, 9) and the bus-bar compartment (7).

9. The switchgear (1) according to any one of Claims 1 to 8, further comprising a ventilator (3) on a top portion of the housing (2) of the switchgear (1),
wherein the sintered metal material (22) is disposed under a flapper (31) in the ventilator (3).

## Patentansprüche

1. Schaltanlage (1) mit Metallhülle, wovon ein Innenraum durch Trennwände (4) in mehrere Fächer (5, 6, 7, 8, 9) unterteilt ist,
wobei einige der Trennwände (4) mit einem explosionsbeständigen Filter (18) versehen sind,
**dadurch gekennzeichnet, dass** der explosionsbeständige Filter (18) ein gesintertes Metallmaterial (22) nutzt und eine Metallhalterung (19) aufweist, die an der Trennwand (4) montiert ist und das gesinterte Metallmaterial (22) gestützt in einer Position befestigt, wobei der explosionsbeständige Filter (18) einen elastischen Körper umfasst, der zwischen dem gesinterten Metallmaterial (22) und einem Halteelement (20) angeordnet ist, um das gesinterte Metallmaterial (22) gestützt in einer Position zu befestigen, und wobei das gesinterte Metallmaterial (22) in eine Aussparung der Metallhalterung (19) gleitfähig eingesetzt ist und zwischen dem Halteelement (20) und der Metallhalterung (19) gestützt befestigt ist.

2. Schaltanlage (1) nach Anspruch 1,
wobei der explosionsbeständige Filter (18) eine Metallhalterung (19) umfasst, die an der Trennwand (4) mittels eines Scharniers (26) schwenkbar montiert ist und das gesinterte Metallmaterial (22) gestützt in einer Position befestigt, und
wobei das gesinterte Metallmaterial (22) zwischen dem Halteelement (20) und der Metallhalterung (19) gestützt befestigt ist.

3. Schaltanlage (1) nach Anspruch 1,
wobei der explosionsbeständige Filter (18) ein explosionsbeständiger Filter vom Typ mit Schraubenbefestigung ist, bei dem das gesinterte Metallmaterial (22) durch Montieren des Halteelements (20) mittels mehrerer Schrauben und Muttern an der Trennwand (4) gestützt in einer Position befestigt wird.

4. Schaltanlage (1) nach Anspruch 2,
wobei die Metallhalterung (19) an der Trennwand (4) durch Verschweißen oder durch Verwenden mehrerer Bolzen und Muttern montiert ist.

5. Schaltanlage (1) nach einem der Ansprüche 2 bis 4,
wobei das Halteelement (20) mehrere Öffnungen aufweist, die in Gitterform angeordnet sind.

6. Schaltanlage (1) nach einem der Ansprüche 2 bis 4,
wobei das Halteelement (20) eine Öffnung in der Mitte aufweist und das gesinterte Metallmaterial (22) mittels eines Umfangselements der Öffnung gestützt befestigt.

7. Schaltanlage (1) nach einem der Ansprüche 2 bis 6,
wobei das Halteelement (20) wenigstens einen Griff (24) umfasst.

8. Schaltanlage (1) nach einem der Ansprüche 1 bis 7, die ferner Folgendes umfasst:
mehrere Unterbrecherfächer (5, 6), die in einem Gehäuse (2) vertikal aufeinandergestapelt sind und die jeweils einen Unterbrecher (10) aufnehmen;
ein Kabelfach (8, 9), das auf einer entfernt liegenden Seite der mehreren Unterbrecherfächer (5, 6) angeordnet ist und Kabel (14) aufnimmt, die mit den Unterbrecher (10) elektrisch verbunden sind; und
ein Sammelschienenfach (7), das auf der entfernt liegenden Seite der mehreren Unterbrecherfächer (5, 6) angeordnet ist und an das Kabelfach (8, 9) angrenzt, und Sammelschienen (13) aufnimmt, die mit den Unterbrechern (10) elektrisch verbunden sind,
wobei der explosionsbeständige Filter (18) an wenigstens einer der Stellen zwischen entsprechenden Paaren von mehreren Unterbrecherfächern (5, 6); zwischen den mehreren Unterbrecherfächern (5, 6) und dem Kabelfach (8, 9); zwischen den mehreren Unterbrecherfächern (5, 6) und dem Sammelschienenfach (7); und zwischen dem Kabelfach (8, 9) und dem Sammelschienenfach (7) angeordnet ist.

9. Schaltanlage (1) nach einem der Ansprüche 1 bis 8, die ferner einen Ventilator (3) am oberen Abschnitt des Gehäuses (2) der Schaltanlage (1) umfasst,
wobei das gesinterte Metallmaterial (22) im Ventilator (3) unter einer Prallplatte (31) angeordnet ist.

## Revendications

1. Appareillage de commutation fermé métallique (1), un espace interne de celui-ci étant divisé en une pluralité de compartiments (5, 6, 7, 8, 9) par des parois de cloisonnement (4),
dans lequel certaines des parois de cloisonnement (4) sont dotées d'un filtre antidéflagrant (18),
**caractérisé en ce que** le filtre antidéflagrant (18) emploie un matériau métallique fritté (22) et inclut un support métallique (19) monté sur la paroi de cloisonnement (4) et fixant de manière solidaire le matériau métallique fritté (22) en position, dans lequel le filtre antidéflagrant (18) inclut un corps élastique disposé entre le matériau métallique fritté (22) et un élément de support (20) destiné à fixer de manière solidaire le matériau métallique fritté (22) en position et dans lequel
le matériau métallique fritté (22) est inséré par coulissement dans un évidement du support métallique (19) et est fixé de manière solidaire entre l'élément de support (20) et le support métallique (9).

2. Appareillage de commutation (1) selon la revendication 1,
dans lequel le filtre antidéflagrant (18) inclut un support métallique (19) monté de manière pivotante sur la paroi de cloisonnement (4) au moyen d'une charnière (26) et fixant de manière solidaire le matériau métallique fritté (22) en position, et
le matériau métallique fritté (22) est fixé de manière solidaire entre l'élément de support (20) et le support métallique (19).

3. Appareillage de commutation (1) selon la revendication 1,
dans lequel le filtre antidéflagrant (18) est un filtre antidéflagrant de type à fixation à boulon dans lequel le matériau métallique fritté (22) est fixé de manière solidaire en position par montage de l'élément de support (20) sur la paroi de cloisonnement (4) au moyen d'une pluralité de boulons et d'écrous.

4. Appareillage de commutation (1) selon la revendication 2,
dans lequel le support métallique (19) est monté sur la paroi de cloisonnement (4) par soudage ou en utilisant une pluralité de boulons et d'écrous.

5. Appareillage de commutation (1) selon l'une quelconque des revendications 2 à 4,
dans lequel l'élément de support (20) inclut une pluralité d'ouvertures agencées dans une forme en treillis.

6. Appareillage de commutation (1) selon l'une quelconque des revendications 2 à 4,
dans lequel l'élément de support (20) inclut une ouverture au niveau du centre de celui-ci et fixe de manière solidaire le matériau métallique fritté (22) au moyen d'une partie périphérique de l'ouverture.

7. Appareillage de commutation (1) selon l'une quelconque des revendications 2 à 6,
dans lequel l'élément de support (20) inclut au moins une poignée (24).

8. Appareillage de commutation (1) selon l'une quelconque des revendications 1 à 7, comprenant en outre :
une pluralité de compartiments à coupe-circuit (5, 6) empilés verticalement les uns au-dessus les autres dans un boîtier (2) et logeant chacun un coupe-circuit (10) à l'intérieur ;
un compartiment à câbles (8, 9) disposé sur un côté éloigné de la pluralité de compartiments à coupe-circuit (5, 6) et logeant des câbles (14) électriquement connectés aux coupe-circuits (10) ; et
un compartiment à barre omnibus (7) disposé sur le côté éloigné de la pluralité de compartiments à coupe-circuit (5, 6) et dans une relation adjacente avec le compartiment à câbles (8, 9), et
logeant à l'intérieur des barres omnibus (13) électriquement connectées aux coupe-circuits (10),
dans lequel le filtre antidéflagrant (18) est disposé au moins dans un des emplacements entre des paires respectives de la pluralité de compartiments à coupe-circuits (5, 6) ; entre la pluralité de compartiments à coupe-circuit (5, 6) et le compartiment à câbles (8, 9) ; entre la pluralité de compartiments à coupe-circuit (5, 6) et le compartiment à barre omnibus (7) ; et entre le compartiment à câbles (8, 9) et le compartiment à barre omnibus (7).

9. Appareillage de commutation (1) selon l'une quelconque des revendications 1 à 8, comprenant en outre un ventilateur (3) sur une portion de sommet du boîtier (2) de l'appareillage de commutation (1),
dans lequel le matériau métallique fritté (22) est disposé sous un clapet (31) dans le ventilateur (3).
